# EUROPEAN PATENT APPLICATION

(11) **EP 4 697 433 A1**
(43) Date of publication of application: **18.02.2026**
(21) Application number: 24788174.1
(22) Date of filing: 12.04.2024
(51) Int. Cl.: H01M 10/058, H01M 10/052, H01M 10/0562

(54) **MOLTEN LITHIUM METAL BATTERY BASED ON CERAMIC ELECTROLYTE SHEET**

(30) Priority: 14.04.2023 CN 202310403017
(71) Applicant: Metagenesis, Ltd., Grand Cayman KY-1-9010 (KY)
(72) Inventor: LIU, Kai, Yangzhou, Jiangsu 225200 (CN); SUN, Liangliang, Yangzhou, Jiangsu 225200 (CN); XU, Daman, Yangzhou, Jiangsu 225200 (CN); CAI, Shen, Yangzhou, Jiangsu 225200 (CN); WU, Lemou, Yangzhou, Jiangsu 225200 (CN)
(74) Representative: Müller Schupfner & Partner Patent- und Rechtsanwaltspartnerschaft mbB (Muc)
(86) International application number: PCT/CN2024/087357
(87) International publication number: WO 2024/213073

(57) **Abstract**

A molten lithium metal battery based on a ceramic electrolyte sheet, comprising: a casing in the shape of the Chinese character " 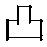 " and a ceramic electrolyte sheet, wherein the ceramic electrolyte sheet divides said casing into an upper part and a lower part, the upper part is a negative electrode chamber, the lower part is a positive electrode chamber, a positive electrode material is contained in the positive electrode chamber, and a lithium recess is formed in the negative electrode chamber; gas guide metal tubes, wherein the gas guide metal tubes are connected to and communicated with said casing, and openings of the air guide metal tubes are higher than the bottom surface of the ceramic electrolyte sheet; an upper cover and a negative electrode current collector, wherein the negative electrode current collector passes through the upper cover and is led out from the upper cover, the negative electrode current collector and the upper cover are sealed together by means of an insulating sealing material, the upper cover is arranged at the top of said casing and seals said casing, a negative electrode material is contained in the lithium recess, and a seal is formed between the lithium recess and said casing; and a bottom cover, wherein the bottom cover is connected to the bottom end of said casing. (FIG. 1)

## Description

### CROSS-REFERENCE TO RELATED APPLICATIONS

This application claims priority to Chinese Patent Application No. 202310403017.0, filed before China National Intellectual Property Administration on April 14, 2023, which is incorporated herein by reference in its entirety.

### FIELD OF THE INVENTION

The present disclosure relates to the technical field of molten lithium metal batteries, in particular to a ceramic electrolyte sheet based molten lithium metal battery.

### BACKGROUND OF THE INVENTION

With the progress of human society and the continuous development of the economy, non-renewable energy such as fossil fuels are gradually depleting, and the demand for clean, green, and low-carbon renewable energy is becoming increasingly urgent. Renewable energy such as solar and wind energy are not only environmentally friendly but also recyclable, making them ideal low-carbon energy. However, the instability and intermittency of power output from solar and wind energy make interconnection difficult, which is adverse to the safe and stable operation of the power grid. Therefore, there is an urgent need to develop a safe, stable, and large-scale energy storage system.

Among various energy storage technologies, electrochemical energy is an important development direction for large-scale energy storage technologies, i.e., the use of batteries has attracted increasing attention.

Lithium batteries use lithium as the medium of transporting and storing energy. Lithium is the lightest metal element in nature and has a low redox potential (-3.04 V), which makes lithium-ion batteries have higher output voltage and energy density compared to other types of batteries.

Molten lithium metal batteries based on solid electrolytes, which have been developed in recent years, are promising for applications in fields such as large-scale power grid energy storage, backup power sources, and power batteries for large-scale electric vehicles due to their high safety, high energy density, and low cost.

CN109075412A discloses a rechargeable lithium-air battery, including a ceramic membrane forming a negative electrode chamber, a molten lithium negative electrode contained in the negative electrode chamber, an air positive electrode, and a non-aqueous electrolyte. The battery is cylindrical, with fins extending longitudinally along the cylinder and radiating outward away from the battery core. The basic structure is supported by a hollow solid electrolyte cylinder (negative electrode chamber) extending the length of the battery and serving as the battery separator. Molten lithium metal is contained in a reservoir located at the top of the battery and an annular cavity, allowing molten lithium to flow freely from the reservoir into the annular cavity. The top level of the molten negative electrode is not expected to completely fill the top space of the battery. An electric heater element extends along the length of the battery and is positioned to keep the lithium in a molten state. The heater is a part of the core structure. An annular cavity is formed between the heater and the inner wall of the solid electrolyte, which contains molten lithium. An unfolded view of the radial plane cross-section of the battery shows a heater/spacer including a heater element, a finned positive electrode, an annular lithium cavity, a solid electrolyte cylinder, and a molten lithium negative electrode.

US20190006720A1 discloses a molten lithium-sulfur battery with a solid electrolyte, including: a sealed case; a solid electrolyte; a conductive metal foam having a plurality of pores; an anode using the metal foam and using lithium (Li) or a lithium alloy as an anode active material being accommodated into the metal foam; and a cathode using the metal foam and using sulfur (S) or a sulfide as a cathode active material, wherein the metal foam is formed of iron (Fe) or nickel (Ni). The battery includes a sealed case, a solid electrolyte, a metal foam, an anode using the metal foam as a binder and using lithium (Li) or a lithium alloy as the active material, and a cathode electrode using the metal foam as a binder and using sulfur (S) or a sulfide as the active material. The solid electrolyte is manufactured by sequentially layering an atmosphere-adjusting powder, a multilayered electrolyte powder, and the atmosphere-adjusting powder. The atmosphere-adjusting powder may be composed of a material that is the same as a material of the solid electrolyte, or the atmosphere-adjusting powder comprises a lithium-rich powder.

CN112514136A discloses a molten lithium electrochemical battery based on a solid electrolyte, including a solid electrolyte, a positive electrode material, and a negative electrode material. The solid electrolyte used has a U-shaped tube structure, with molten metal lithium filled inside the U-shaped tube as the negative electrode, and a Sn-Pb alloy filled between the outside of the U-shaped tube and the stainless steel shell as the positive electrode.

CN113678300A discloses an electrochemical battery, including: an anode containing lithium metal or a lithium alloy; a cathode containing sulfur, selenium, or a mixture thereof; and a solid electrolyte located between the anode and the cathode, wherein the solid electrolyte can conduct lithium ions. The battery includes an anode containing lithium metal or a lithium metal alloy, a cathode containing sulfur or selenium, and a solid electrolyte in the form of a tube adjacent to the anode and separating the anode from the cathode.

CN114335758A discloses a high-temperature molten lithium-iodine battery based on a garnet solid electrolyte, including a garnet solid electrolyte, a positive electrode material, and a negative electrode material. The garnet solid electrolyte is an LLZTO ceramic, the positive electrode material includes a CsI/LiI eutectic salt, and the negative electrode material is molten metal lithium. It includes a U-shaped garnet LLZTO (Li_{6.4}La₃Zr_{1.4}Ta_{0.6}O₁₂) ceramic electrolyte tube as the solid electrolyte, a eutectic iodide filled inside the U-shaped tube as the positive electrode, lithium metal filled between the outside of the U-shaped tube and the stainless steel shell as the negative electrode, with a graphite rod as the current collector for conduction, forming the basic structure of the high-temperature molten lithium-iodine battery with a garnet solid electrolyte.

It's well known that molten lithium metal batteries based on U-shaped tubular solid electrolytes face several challenges. On one hand, the forming of U-shaped ceramic electrolyte tubes is difficult, and the preparation process is complex. On the other hand, the poor wettability between the molten metallic lithium and the ceramic electrolyte results in high interfacial resistance, which reduces the overall battery performance. Liu Kai et al., Molten Lithium-Brass/Zinc Chloride System as High-Performance and Low-Cost Battery. Matter, 2020, 3, it reduced the interfacial resistance between molten metallic lithium and the ceramic electrolyte by providing a protective interfacial layer between the inner wall of the U-shaped tubular electrolyte and a stainless steel mesh, and by ensuring tight contact between the stainless steel mesh and the inner wall of the U-shaped tube. However, the drawback of the molten lithium metal battery structure based on the ceramic U-shaped tubular electrolyte lies in the fact that the protective interfacial layer on the U-shaped tube is prone to detachment and loss, depositing at the bottom of the tube, leading to an increase in the internal resistance of the battery and affecting its cycle life. Additionally, under prolonged high-temperature conditions, the supporting effect of the stainless steel mesh weakens or is lost, preventing tight contact with the U-shaped tube, which results in increased internal resistance or open circuit, thereby affecting the battery's performance.

### SUMMARY OF THE INVENTION

The present disclosure provides a ceramic electrolyte sheet based molten lithium metal battery.

In a first aspect, the present disclosure provides a ceramic electrolyte sheet based molten lithium metal battery, comprising:
a convex casing and a ceramic electrolyte sheet, wherein the ceramic electrolyte sheet divides the convex casing into an upper part and a lower part, the upper part is a negative electrode chamber, the lower part is a positive electrode chamber; the positive electrode chamber includes a positive electrode material, and the negative electrode chamber is provided with a lithium recess; and the upper surface of the ceramic electrolyte sheet is in tight contact with the lithium recess;
a gas-guide metal tube, wherein the gas-guide metal tube is connected to the convex casing and penetrates the convex casing, and an orifice of the gas-guide metal tube is higher than the bottom surface of the ceramic electrolyte sheet;
an upper cover and a negative electrode current collector, wherein the upper cover is annular, wherein the negative electrode current collector penetrates the upper cover and is led out from the upper cover, the negative electrode current collector and the upper cover are sealed together by means of an insulating sealing material, and the upper cover is placed on the top of the convex casing and seals the convex casing; and
the lithium recess serves as a container for storing molten metallic lithium, the lithium recess includes a negative electrode material, and a seal is formed between the lithium recess and the convex casing; and
a bottom cover, wherein the bottom cover is connected to the bottom end of the convex casing.

Optionally, the ceramic electrolyte sheet, the lithium recess, and the convex casing are hermetically sealed by the insulating sealing material.

The present disclosure provides a ceramic electrolyte sheet based molten lithium metal battery. The molten lithium metal battery uses the ceramic electrolyte sheet to divide the convex casing into an upper part and a lower part, the upper part is a negative electrode chamber, the lower part is a positive electrode chamber. The upper negative electrode chamber is provided with a lithium recess as a lithium storage chamber, and the lower positive electrode chamber is filled with a positive electrode material. A gas-guide metal tube is connected to the convex casing and penetrates the positive electrode chamber. A liquid positive electrode lithium ion conducting electrolytic solution can be vacuum-introduced into the positive electrode chamber through the gas-guide metal tube.

Optionally, the lithium recess further includes an interface protection composition; the interface protection composition is a mixture of an alkali metal salt or an alkaline earth metal salt. Preferably, the interface protection composition is an alkali metal bromide salt or an alkaline earth metal bromide salt; preferably, the interface protection composition is any one of lithium bromide, sodium bromide, potassium bromide, and cesium bromide; preferably, the interface protection composition is a mixture of lithium bromide, potassium bromide, and cesium bromide.

Optionally, a diameter M of the interface protection composition is 3 to 400 mm, or M is 4 to 200 mm, or M is 5 to 50 mm, or M is 10 mm, or M is 15 mm, or M is 35 mm, or M is 40 mm.

Optionally, a thickness N of the interface protection composition is 0.2 to 300 mm, or N is 0.4 to 100 mm, or N is 0.5 to 50 mm, or N is 1 mm, or N is 5 mm, or N is 10 mm, or N is 20 mm.

Optionally, a ratio of the thickness N to the diameter M of the interface protection composition satisfies: 0.01 ≤ N/M ≤ 0.5, or 0.02 ≤ N/M ≤ 0.4, or 0.05 ≤ N/M ≤ 0.3, or 0.1 ≤ N/M ≤ 0.15.

Optionally, the negative electrode material is lithium or a lithium alloy; preferably, the negative electrode is a lithium-zinc alloy, a lithium-aluminum alloy, or a lithium-magnesium alloy.

Optionally, a diameter K of the negative electrode material is 3 to 400 mm, or K is 4 to 200 mm, or K is 5 to 50 mm, or K is 10 mm, or K is 15 mm, or K is 35 mm, or K is 40 mm.

Optionally, a thickness L of the negative electrode material is 0.2 to 300 mm, or L is 0.4 to 100 mm, or L is 0.5 to 50 mm, or L is 1 mm, or L is 5 mm, or L is 10 mm, or L is 20 mm.

Optionally, a ratio of the thickness L to the diameter K of the negative electrode material satisfies: 0.01 ≤ L/K ≤ 0.5, or 0.01 ≤ L/K ≤ 0.5, or 0.02 ≤ L/K ≤ 0.35, or 0.05 ≤ L/K ≤ 0.3, or 0.1 ≤ L/K ≤ 0.2.

Optionally, the interface protection composition is disposed between the ceramic electrolyte sheet and the negative electrode material.

The lithium recess of the molten lithium metal battery provided in the present disclosure further provided with the interface protection composition, and the interface protection composition is disposed between the ceramic electrolyte sheet and the negative electrode material. The interface protection composition has a melting point lower than 500°C, and it is stable towards molten lithium metal. For example, the interface protection composition can be a bromide salt mixture LiBr-KBr-CsBr. When heated and melted, the interfacial protection composition can form a protective salt film on the surface of the ceramic electrolyte sheet, which can effectively protect the interface.

Optionally, the positive electrode chamber further includes a positive electrode lithium ion conducting electrolytic solution, which is introduced through the gas-guide metal tube. The positive electrode lithium ion conducting electrolytic solution is LiAlCl₄; and the liquid level in the positive electrode chamber is always higher than the bottom surface of the ceramic electrolyte sheet.

First, the ceramic electrolyte sheet in the present disclosure is simpler to form and easier to prepare compared to the ceramic tube.

Additionally, the design of the negative electrode chamber, the ceramic electrolyte sheet, and the positive electrode chamber in a top-down structure in the present disclosure enables the negative electrode liquid protection layer in the negative electrode chamber to contact the ceramic electrolyte sheet uniformly, avoiding the loss problem of the liquid protection layer at the negative electrode in the current U-shaped tube structure.

Furthermore, the battery structure provided in the present disclosure also includes a gas-guide metal tube for introducing the positive electrode lithium ion conducting electrolytic solution, and the orifice of the gas-guide metal tube is higher than the bottom surface of the ceramic electrolyte sheet. The current technologies usually mix a solid lithium ion conducting additive with a solid positive electrode material, but the problems with this include: a. uneven mixing of the additive and positive electrode material; b. a small amount of the additive cannot achieve a good effect of conducting lithium ions. If more additive is used, it will occupy too much space in the positive electrode chamber. Since the space in the positive electrode chamber is limited, the amount of positive electrode material will be reduced accordingly, leading to a decrease in the capacity of the battery. The present disclosure uses the design of the gas-guide metal tube and a liquid lithium ion conducting electrolytic solution. The lithium ion conducting electrolytic solution is introduced into the positive electrode chamber through the gas-guide metal tube. The liquid lithium ion conducting electrolytic solution can not only improve the wettability of the positive electrode material and enhance lithium ion conducting capability, but also, by filling the gaps of the positive electrode material with the electrolytic solution, greatly reduce the space it occupies and increase the capacity of the battery. If necessary, the replenishment of the electrolytic solution can also be performed. At the same time, the design where the orifice of the gas-guide metal tube is higher than the bottom surface of the ceramic electrolyte sheet ensures that: the liquid level in the positive electrode chamber is always higher than the bottom of the ceramic electrolyte sheet, ensuring good contact between the positive electrode material and the ceramic electrolyte sheet, providing a relatively good migration path for lithium ions, and effectively reducing lithium ion diffusion resistance. Moreover, the structure design of the gas-guide metal tube can also effectively remove gas from the positive electrode chamber, making the positive electrode material combine more densely.

Optionally, the molten lithium metal battery further comprises: a lithium recess cover, wherein the lithium recess cover is disposed above the lithium recess and is used to seal the opening of the lithium recess; one end of the negative electrode current collector is in contact with the ceramic electrolyte sheet, and the other end of the negative electrode current collector is led out sequentially through the lithium recess cover and the upper cover. To facilitate the addition of negative electrode material and the interfacial protection composition into the lithium recess, the lithium recess in the present disclosure may be a structure with an upward opening, and accordingly, a lithium recess cover is designed to seal the opening of the lithium recess, thereby forming a seal between the lithium recess and the convex casing. Meanwhile, the structure design employing tight contact between the negative electrode current collector and the ceramic electrolyte sheet further reduces the internal resistance of the battery, improves the rate performance of the battery, and thereby enhances the overall electrochemical performance of the battery.

Optionally, a diameter D of the ceramic electrolyte sheet is 5 to 500 mm, or D is 10 to 300 mm, or D is 15 to 200 mm, or D is 20 mm, or D is 30 mm, or D is 50 mm, or D is 80 mm.

Optionally, a diameter X of the lithium recess is 4 to 450 mm, or X is 8 to 300 mm, or X is 10 to 250 mm, or X is 15 mm, or X is 20 mm, or X is 30 mm, or X is 60 mm.

Optionally, a ratio of the diameter X of the lithium recess to the diameter D of the ceramic electrolyte sheet satisfies: 0.4 ≤ X/D ≤ 1.0, or 0.5 ≤ X/D ≤ 0.95, or 0.6 ≤ X/D ≤ 0.85, or 0.7 ≤ X/D ≤ 0.8.

Optionally, a height H of the positive electrode chamber is 2 to 400 mm, or H is 3 to 200 mm, or H is 5 to 50 mm, or H is 10 mm, or H is 15 mm, or H is 35 mm, or H is 40 mm.

Optionally, a diameter Y of the positive electrode chamber is 5 to 500 mm, or Y is 10 to 300 mm, or Y is 15 to 200 mm, or Y is 20 mm, or Y is 30 mm, or Y is 50 mm, or Y is 80 mm.

Optionally, a ratio of the height H to the diameter Y of the positive electrode chamber satisfies: 0.01 ≤ H/Y ≤ 0.8, or 0.03 ≤ H/Y ≤ 0.6, or 0.05 ≤ H/Y ≤ 0.5, or 0.1 ≤ H/Y ≤ 0.4, or 0.2 ≤ H/Y ≤ 0.3.

Optionally, the positive electrode material is a uniformly mixed powder of lithium chloride LiCl and brass powder (CuZn alloy).

Optionally, the positive electrode lithium-ion conducting electrolytic solution is filled at a high temperature, and the temperature is not lower than 100°C.

Optionally, the insulating sealing material is a high-temperature resistant insulating material.

Optionally, the bottom cover is welded to the convex casing.

Optionally, the upper cover is welded to the convex casing.

Optionally, the gas-guide metal tube is welded to the convex casing.

Optionally, two symmetrically arranged gas-guide metal tubes are connected to the convex casing, and the gas-guide metal tubes penetrate the interior of the positive electrode chamber.

Optionally, the positive electrode chamber is provided with at least one layer of an adsorption material; the adsorption material includes at least one layer of an open-pore structure, the open-pore structure includes a plurality of through pores arranged along the vertical direction, the interior of the pores of the open-pore structure is filled with the positive electrode material, and the non-porous parts of the open-pore structure adsorb the positive electrode lithium ion conducting electrolytic solution; a diameter of the pores in the open-pore structure is 3 mm ≤ r₁ ≤ 12 mm, and a spacing between the pores is y ≤ 1 mm.

Optionally, the adsorption material further includes at least one layer of a non-porous structure, wherein the non-porous structure is disposed at a bottom surface of the open-pore structure and seals the bottom of the open-pore structure; the interior of the pores in the open-pore structure is filled with the positive electrode material, and the non-porous parts of the open-pore structure and the non-porous structure adsorb the positive electrode lithium ion conducting electrolytic solution; a diameter of the pores in the open-pore structure is r₂ ≥ 3 mm, and a vertical distance from the center of the pores in the open-pore structure to the adjacent non-porous structure is h ≤ 6 mm.

Optionally, the open-pore structure has a honeycomb briquette configuration.

Optionally, the adsorption material is a three-dimensional structural material with an alternating design of open-pore structure and non-porous structure.

Optionally, the material of the adsorption material is carbon felt.

Currently, solid-state batteries face challenges in improving rate performance. As the electrode thickness increases, the transport of lithium ions in the pores of the electrode becomes the rate-determining step during battery charging and discharging. In molten lithium batteries based on solid electrolytes, under high-rate charging and discharging conditions, lithium ions may transport arbitrarily in the positive electrode chamber, resulting in a tortuous transport path. Due to the long ion transport distance under high tortuosity within the positive electrode, the rate performance of the battery is poor.

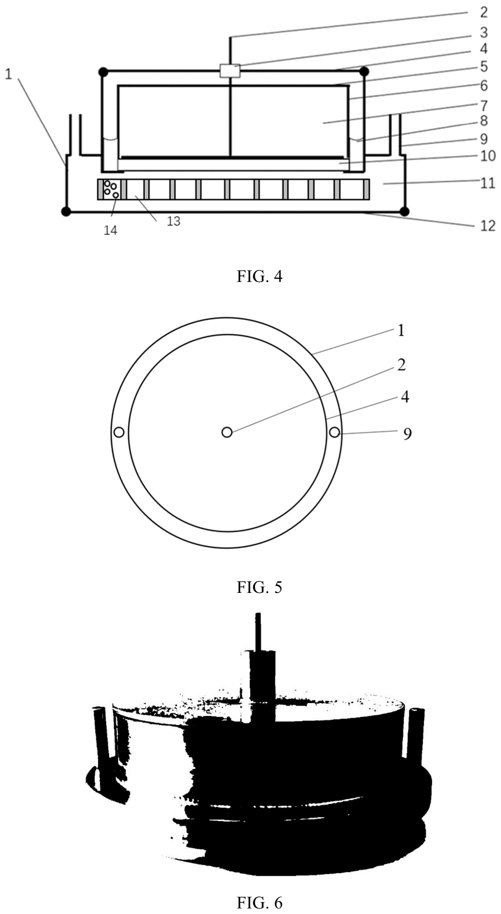

To address this issue, the present disclosure provides a positive electrode structure design for a molten lithium-ion battery using a honeycomb briquette-configuration adsorption material. By filling the interior of the honeycomb briquette with the positive electrode material and adsorbing lithium-ion conducting molten salt on the exterior to form efficient lithium ion conducting channels and electron conducting capability, the rate performance of the battery is significantly improved. Specifically, referring to FIG. 4, the positive electrode chamber of the battery is provided with the adsorption material 13. In FIG. 4, only one layer of open-pore structure is drawn for the adsorption material 13. In this open-pore structure, the interior of the pores is filled with positive electrode material 14, and the non-porous structure between the pores adsorbs the positive electrode lithium ion conducting electrolytic solution. Lithium ions can transport along the non-porous structure, thereby solving the problem of excessively long lithium ion transport paths. Meanwhile, to allow more positive electrode material to be filled into the pores, the diameter of the pores cannot be too small. However, to prevent the diameter of the pores from being too large, which would still cause tortuous lithium ion transport, the pore size is limited, with the diameter of the pores in the open-pore structure defined as 3 mm ≤ r₁ ≤ 12 mm.

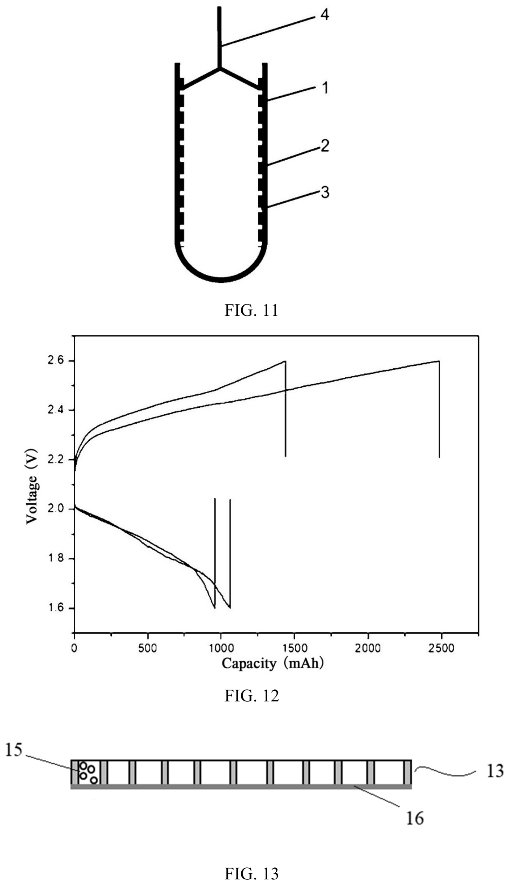

Simultaneously, for some positive electrode chambers with larger diameters, the applicant intends to use open-pore materials with larger pore sizes in the positive electrode chamber. To avoid the problem of tortuous lithium ion transport caused by excessively large pores, the present disclosure further provides a structure for the adsorption material. Specifically, referring to FIG. 13, the adsorption material 13 further includes at least one layer of non-porous structure 16. The non-porous structure 16 is disposed at the bottom surface of the open-pore structure 15 and seals the bottom of the open-pore structure 15. The interior of the pores in the open-pore structure 15 is filled with the positive electrode material 14. The non-porous parts of the open-pore structure 15 and the non-porous structure 16 adsorb the positive electrode lithium ion conducting electrolytic solution. In this adsorption material, the maximum diameter of the pores in the open-pore structure is not limited, but the vertical distance from the center of the pores to the adjacent non-porous structure is limited to h ≤ 6 mm. This allows lithium ions to first transport to the non-porous structure and then transport along the non-porous structure of the open-pore structure. At this time, the lithium ion channel is L-shaped, which can also avoid the problem of tortuous lithium ion transport. Further, the present disclosure may adopt a three-dimensional positive electrode structure design for molten lithium-ion batteries with alternating layers of honeycomb briquette-configuration open-pore structure and non-porous adsorption material layers.

In summary, the adsorption material provided by the present disclosure optimizes the lithium ion transport channels, making it suitable for positive electrode chambers of various sizes while maintaining the same rate performance of the battery. The adsorption material has excellent electron conducting capability and the ability to adsorb lithium ion conducting molten salt, for example, the adsorption material is carbon felt. Meanwhile, this adsorption material is capable of resisting high temperature of 250 to 400°C.

Optionally, the material of the convex casing is 200 series stainless steel, 300 series stainless steel, or 400 series stainless steel, preferably 304 stainless steel.

Optionally, the material of the gas-guide metal tube is 200 series stainless steel, 300 series stainless steel, or 400 series stainless steel, preferably 304 stainless steel.

Optionally, the material of the upper cover is 200 series stainless steel, 300 series stainless steel, or 400 series stainless steel, preferably 304 stainless steel.

Optionally, the ceramic electrolyte sheet includes any one of a garnet-type oxide ceramic sheet, a lithium superionic conductor (LISICON)-type oxide ceramic sheet, and a perovskite-type oxide ceramic sheet, preferably a garnet-type oxide ceramic sheet.

Optionally, the material of the lithium recess is 200 series stainless steel, 300 series stainless steel, or 400 series stainless steel, preferably 304 material.

Optionally, the material of the bottom cover is 200 series stainless steel, 300 series stainless steel, or 400 series stainless steel, preferably 304 material.

In a second aspect, the present disclosure provides a method for preparing the molten lithium metal battery as described above, comprising the following steps:
placing the ceramic electrolyte sheet into the convex casing, dividing the convex casing into an upper negative electrode chamber and a lower positive electrode chamber, and placing the lithium recess on the upper surface of the ceramic electrolyte sheet with the lithium recess located in the negative electrode chamber; hermetically sealing the ceramic electrolyte sheet, the lithium recess, and the convex casing with the insulating sealing material;
filling the positive electrode material into the positive electrode chamber; optionally, first filling the adsorption material into the positive electrode chamber, and then filling the positive electrode material into the interior of the pores in the open-pore structure of the adsorption material;
   connecting the bottom cover to the bottom of the convex casing;
   filling the negative electrode material into the lithium recess;
placing the upper cover at the top of the convex casing and sealing the convex casing, wherein the negative electrode current collector is led out from the upper cover, and the connection between the negative electrode current collector and the upper cover is hermetically sealed with the insulating sealing material, and a seal is formed between the lithium recess and the convex casing; and
vacuum-introducing the positive electrode lithium-ion conducting electrolytic solution from the gas-guide metal tube into the positive electrode chamber to form the molten lithium metal battery based on the ceramic electrolyte sheet.

Optionally, the molten lithium metal battery of the present disclosure further includes a lithium recess cover. After filling the negative electrode material into the lithium recess, the lithium recess cover is disposed above the lithium recess and used to seal the opening of the lithium recess; one end of the negative electrode current collector is in contact with the ceramic electrolyte sheet, and the other end of the negative electrode current collector is led out sequentially from the lithium recess cover and the upper cover.

### BRIEF DESCRIPTION OF THE DRAWINGS

FIG. 1 is a schematic diagram of the battery device of Example 1.
FIG. 2 is a schematic diagram of the battery device of Example 2.
FIG. 3 is a schematic diagram of the battery device of Example 3.
FIG. 4 is a schematic diagram of the battery device of Example 4.
FIG. 5 is a top view of the battery device.
FIG. 6 is a physical diagram of the battery device.
FIG. 7 is a charge-discharge cycle data diagram of the battery of Example 1.
FIG. 8 is a charge-discharge cycle data diagram of the battery of Example 2.
FIG. 9 is a charge-discharge cycle data diagram of the battery of Example 3.
FIG. 10 is a charge-discharge cycle data diagram of the battery of Example 4.
FIG. 11 is a schematic diagram of the battery device of Comparative Example 1.
FIG. 12 is a charge-discharge cycle data diagram of Comparative Example 1.
FIG. 13 is a structural schematic diagram of the adsorption material.

1. Convex casing; 2. negative electrode current collector; 3&8. insulating sealing material; 4. upper cover; 5. lithium recess cover; 6. lithium recess; 7. negative electrode chamber; 9. gas-guide metal tube; 10. ceramic electrolyte sheet; 11. positive electrode chamber; 12. bottom cover; 13. adsorption material; 14. positive electrode material; 15. open-pore structure; 16. non-porous structure.

### DETAILED DESCRIPTION OF THE INVENTION

To further understand the present disclosure, the preferred embodiments of the present disclosure are described below in combination with the Examples. However, it should be understood that these descriptions are only for further illustrating the features and advantages of the present disclosure, and not for limiting the present disclosure.

Some detailed embodiments of the present disclosure will be disclosed below. Although the Examples are described in the disclosed content of the present disclosure, the Examples of the present disclosure are not limited to the content shown. The Examples of the present disclosure are only part of the examples that may be formed in the claims, and the remaining unshown Examples, their substitutes, modifications, equivalent Examples, etc. are still within the scope of protection.

To achieve the above objects and effects, the following description will be combined with Examples and drawings, so that those of ordinary skill in the art can implement the present disclosure according to the following.

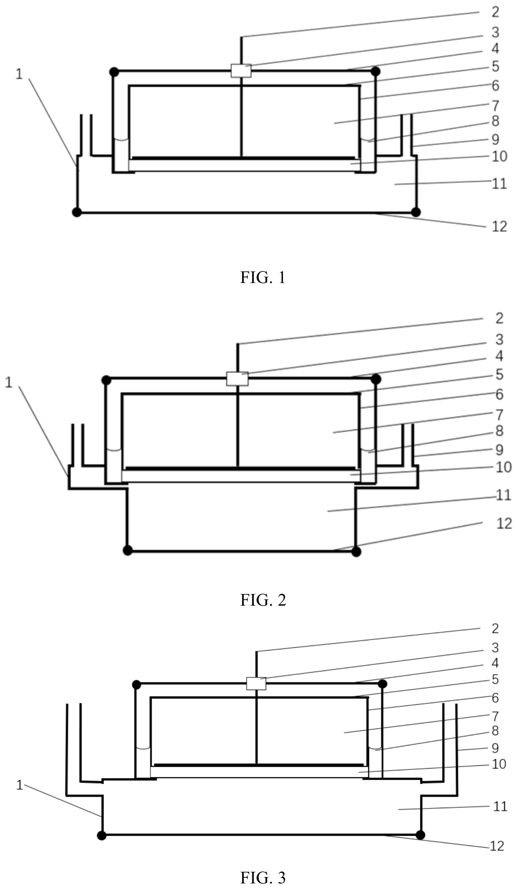

First, referring to FIGs. 1-4, which are perspective cross-sectional views of the present disclosure. As can be seen from the figures, the molten lithium metal battery based on the ceramic electrolyte sheet provided by the present disclosure has a structure design including: 1. convex casing; 2. negative electrode current collector; 3&8. insulating sealing material; 4. upper cover; 5. lithium recess cover; 6. lithium recess; 7. negative electrode chamber; 9. gas-guide metal tube; 10. ceramic electrolyte sheet; 11. positive electrode chamber; 12. bottom cover; 13. adsorption material; 14. positive electrode material; 15. open-pore structure; 16. non-porous structure.

### Example 1

Positive electrode material: LiCl powder, brass powder (wt%, Cu:Zn=52:48), LiAlCl₄ (positive electrode lithium-ion conducting electrolytic solution, added to the positive electrode chamber through the gas-guide metal tube until the liquid level height of the positive electrode lithium ion conducting electrolytic solution is higher than the bottom surface of the ceramic electrolyte sheet).
Negative electrode material: LiZn alloy.
Battery reaction: Positive electrode: Zn = Zn²⁺ + 2e
   Negative electrode: 2Li⁺ + 2e = 2Li
Total battery reaction: Zn + 2LiCl = ZnCl₂+2Li

LiCl and brass powder were weighed with masses of 3.95 g and 7.26 g respectively (corresponding to a theoretical capacity of 2.5 Ah of the battery).

The molten lithium metal battery based on the ceramic electrolyte sheet, comprising: the convex casing 1 and the ceramic electrolyte sheet 10, wherein the ceramic electrolyte sheet 10 divides the convex casing 1 into an upper part and a lower part, the upper part is a negative electrode chamber 7, the lower part is a positive electrode chamber 11; the positive electrode chamber 11 includes the positive electrode material, and the negative electrode chamber 7 is provided with the lithium recess 6; the upper surface of the ceramic electrolyte sheet 10 is in tight contact with the lithium recess 6;
the gas-guide metal tube 9, wherein the gas-guide metal tube 9 is connected to the convex casing 1 and penetrates the convex casing 1, which is used for introducing the positive electrode lithium ion conducting electrolytic solution, and the orifice of the gas-guide metal tube 9 is higher than the bottom surface of the ceramic electrolyte sheet 10;
the upper cover 4 and the negative electrode current collector 2, wherein the upper cover 4 is annular, wherein the negative electrode current collector 2 penetrates the upper cover 4 and is led out from the upper cover 4, the negative electrode current collector and the upper cover are sealed together with by means of the insulating sealing material 3, and the upper cover 4 is placed on the top of the convex casing 1 and seals the convex casing 1;
the lithium recess 6 serves as a container for storing molten metallic lithium,
the lithium recess 6 includes the negative electrode material, and a seal is formed between the lithium recess 6 and the convex casing 1; and
the bottom cover 12, wherein the bottom cover 12 is welded to the bottom end of the convex casing 1.

The battery assembly process of this Example: referring to FIG. 1, first, the ceramic electrolyte sheet 10, the lithium recess 6, and the convex casing 1 were hermetically sealed with the insulating sealing material 8, wherein the lithium recess 6 was directly placed on the ceramic electrolyte sheet 10. The diameter D of the ceramic electrolyte sheet 10 is 23 mm, and the diameter X of the lithium recess 6 is 18 mm.

Then, a uniform powder mixture of lithium chloride LiCl and brass powder was filled into the positive electrode chamber 11. The diameter Y of the positive electrode chamber 11 is 38 mm, and the height H is 5 mm.

While keeping the capacity of the battery unchanged, increasing the lateral diameter of the battery casing can reduce the thickness of the positive electrode and the lithium ion migration distance, which is beneficial for improving the rate performance of the battery.

Furthermore, the bottom cover 12 was placed at the bottom of the convex casing 1 and welded together.

Subsequently, the bromide salt mixture LiBr-KBr-CsBr was placed in the lithium recess 6. This bromide salt mixture can better protect the interface. Its diameter M is 18 mm, and thickness N is 1 mm. Then, the negative electrode material LiZn alloy was placed to form the negative electrode chamber 7, wherein the diameter K of the negative electrode material LiZn alloy is 18 mm, and the thickness L is 1 mm.

Furthermore, the lithium recess cover 5 was provided on the lithium recess 6 to seal the lithium recess 6. The upper cover 4 was provided on the convex casing 1, and they were connected together by welding the convex casing 1 and the upper cover 4. The negative electrode current collector 2 was led out from the lithium recess cover 5 and the upper cover 4. The connection between the negative electrode current collector 2 and the upper cover 4 was hermetically sealed with the insulating sealing material 3, which is an insulating high-temperature resistant material.

Finally, LiAlCl₄ (positive electrode lithium-ion conducting electrolytic solution) was vacuum-introduced into the positive electrode chamber 11 from the gas-guide metal tube 9 under high temperature conditions, and the gas-guide metal tube 9 was welded to complete the battery assembly.

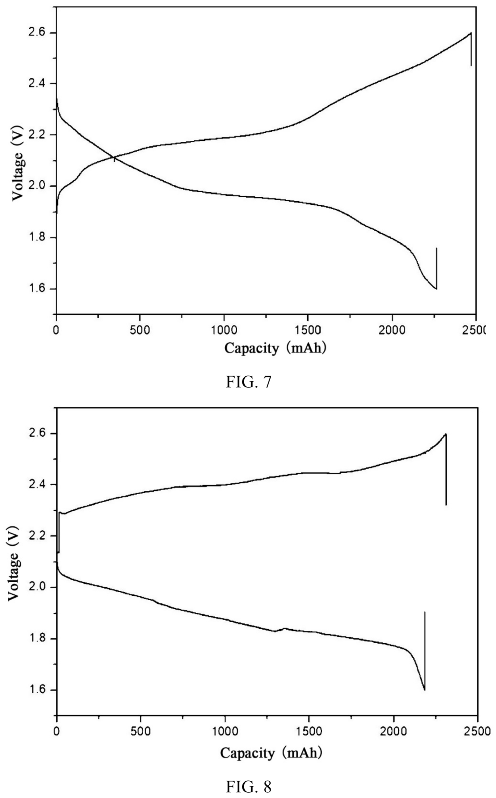

The charge-discharge data obtained using this device is shown in FIG. 7. The first-cycle capacity utilization rate (capacity utilization rate = actual first-cycle capacity of the battery / theoretical capacity of the battery * 100%) of the battery is 98.7%, and the coulombic efficiency of the battery reaches 91.6%.

### Example 2:

Positive electrode material: LiCl powder, brass powder (wt%, Cu:Zn=52:48), LiAlCl₄ (positive electrode lithium-ion conducting electrolytic solution, added to the positive electrode chamber from the gas-guide metal tube until the liquid level height of the positive electrode lithium ion conducting electrolytic solution is higher than the bottom surface of the ceramic electrolyte sheet).
Negative electrode material: LiZn alloy.
Battery reaction: Positive electrode: Zn = Zn²⁺ + 2e
   Negative electrode: 2Li⁺ + 2e = 2Li
Total battery reaction: Zn + 2LiCl = ZnCl₂ + 2Li

LiCl and brass powder were weighed with masses of 3.95 g and 7.26 g respectively (corresponding to a theoretical capacity of 2.5 Ah of the battery).

The molten lithium metal battery provided in Example 2 has the same structure as Example 1, but differs in dimensional structure, as detailed below.

Battery assembly process: referring to FIG. 2, first, the ceramic electrolyte sheet 10, the lithium recess 6, and the convex casing 1 were hermetically sealed with the insulating sealing material 8. The lithium recess 6 was directly placed on the ceramic electrolyte sheet 10, wherein the diameter D of the ceramic electrolyte sheet 10 is 23 mm, and the diameter X of the lithium recess 6 is 18 mm.

Then, a uniform powder mixture of lithium chloride LiCl and brass powder was filled into the positive electrode chamber 11. The upper part diameter Y of the positive electrode chamber 11 is 25 mm, the lower part diameter Y is 18 mm, and the height H is 7 mm.

Furthermore, the bottom cover 12 was placed at the bottom of the convex casing 1 and welded together.

Subsequently, the bromide salt mixture LiBr-KBr-CsBr was placed in the lithium recess 6. This bromide salt mixture can better protect the interface. Its diameter M is 18 mm, and thickness N is 1 mm. Then, the negative electrode material LiZn alloy was placed to form the negative electrode chamber 7, wherein the diameter K of the negative electrode material LiZn alloy is 18 mm, and the thickness L is 1 mm.

Furthermore, the lithium recess cover 5 was provided on the lithium recess 6 to seal the lithium recess 6. The upper cover 4 was provided on the convex casing 1, and they were connected together by welding the convex casing 1 and the upper cover 4. The negative electrode current collector 2 was led out from the lithium recess cover 5 and the upper cover 4. The connection between the negative electrode current collector 2 and the upper cover 4 was hermetically sealed with the insulating sealing material 3.

Finally, LiAlCl₄ (positive electrode lithium-ion conducting electrolytic solution) was vacuum-introduced into the positive electrode chamber 11 from the gas-guide metal tube 9 under high temperature conditions, and the gas-guide metal tube 9 was welded to complete the battery assembly.

While keeping the capacity of the battery unchanged, compared with Example 1, the longitudinal height is increased, and the surface area ratio between the ceramic sheet and the positive electrode material region is increased, improving the tortuosity of lithium ion migration, which is beneficial for lithium ion migration.

A top view of the battery device is shown in FIG. 5, and a physical diagram of the battery device is shown in FIG. 6. Using the aforementioned positive electrode and negative electrode schemes, the charge-discharge data obtained from the operation of this device are shown in FIG. 8. The first-cycle capacity utilization rate of the battery is 92.4%, and the coulombic efficiency of the battery reaches 94.6% (compared to only 38.5% for the U-shaped tube type as shown in FIG. 12). This indicates that the two gas-guide metal tubes design adopted in the battery device for filling lithium ion conducting electrolytic solution can further improve the wettability of the positive electrode material. Moreover, this structure can effectively remove gas from the positive electrode chamber, making the combination of positive electrode materials more tight. Furthermore, the design where the orifice of the gas-guide metal tube of the convex casing being higher than the bottom of the ceramic electrolyte sheet ensures that the liquid level in the lower positive electrode chamber is always higher than the bottom of the ceramic electrolyte sheet. This ensures good contact between the positive electrode material and the electrolyte sheet, resulting in better battery operation.

### Example 3:

Positive electrode material: LiCl powder, brass powder (wt%, Cu:Zn=52:48), LiAlCl₄ (positive electrode lithium ion conducting electrolytic solution, added to the positive electrode chamber through the gas-guide metal tube until the liquid level height of the positive electrode lithium ion conducting electrolytic solution is higher than the bottom surface of the ceramic electrolyte sheet).
Negative electrode material: LiZn alloy.
Battery reaction: Positive electrode: Zn = Zn²⁺ + 2e
   Negative electrode: 2Li⁺ + 2e = 2Li
Total battery reaction: Zn + 2LiCl = ZnCl₂ + 2Li

LiCl and brass powder were weighed with masses of 3.95g and 7.26g respectively (corresponding to a theoretical capacity of 2.5Ah of the battery).

The structure of the molten lithium metal battery provided in Example 3 is the same as that in Example 1, but differs in dimensional structure; details are provided below.

Battery assembly process: referring to FIG. 3, first, the ceramic electrolyte sheet 10, the lithium recess 6, and the convex casing 1 were hermetically sealed with the insulating sealing material 8. The lithium recess 6 was directly placed on the ceramic electrolyte sheet 10, wherein the diameter D of the ceramic electrolyte sheet 10 is 23 mm, and the diameter X of the lithium recess 6 is 18 mm.

Then, a uniform powder mixture of lithium chloride LiCl and brass powder was filled into the positive electrode chamber 11. The diameter Y of the positive electrode chamber 11 is 38 mm, and the height H is 5 mm.

Furthermore, the bottom cover 12 was placed at the bottom of the convex casing 1 and weld together.

Subsequently, the bromide salt mixture LiBr-KBr-CsBr was placed in the lithium recess 6. This bromide salt mixture can better protect the interface. Its diameter M is 18 mm, and its thickness N is 1 mm. Then the negative electrode material LiZn alloy was placed to form the negative electrode chamber 7, wherein the diameter K of the negative electrode material LiZn alloy is 18 mm, and the thickness L is 1 mm.

Furthermore, the lithium recess cover 5 was provided on the lithium recess 6 to seal the lithium recess 6. The upper cover 4 was provided on the convex casing 1, and they were connected together by welding the convex casing 1 and the upper cover 4. The negative electrode current collector 2 was led out from the lithium recess cover 5 and the upper cover 4. The connection between the negative electrode current collector 2 and the upper cover 4 was hermetically sealed with the insulating sealing material 3.

Finally, LiAlCl₄ (positive electrode lithium ion conducting electrolytic solution) was vacuum-introduced into the positive electrode chamber 11 from the gas-guide metal tube 9 under high temperature conditions, and the gas-guide metal tube 9 was welded to complete the battery assembly. The gas-guide metal tube is L-shaped and placed on the side of the convex casing, but its orifice remains higher than the bottom surface of the ceramic electrolyte, ensuring that the liquid level height of the ion conducting electrolytic solution in the positive electrode chamber is always higher than the bottom surface of the ceramic electrolyte sheet.

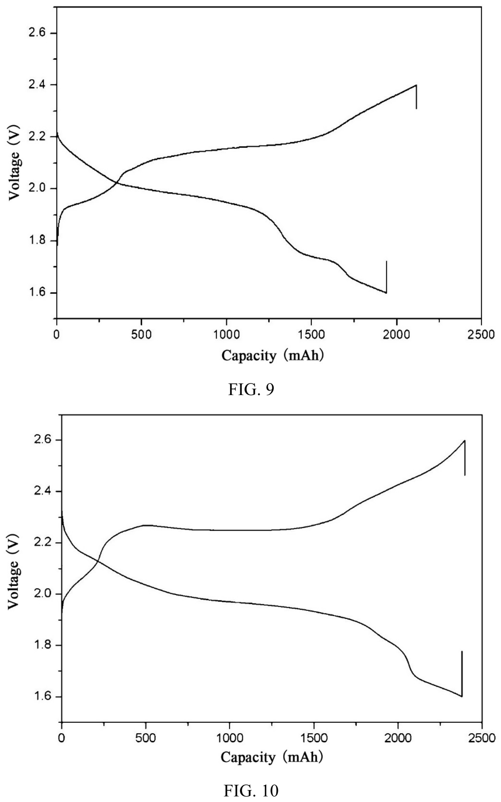

The charge and discharge data obtained from the operation of this device are shown in FIG. 9. The first-cycle capacity utilization rate of the battery is 84.6%, and the coulombic efficiency reaches 91.72%.

### Example 4

Positive electrode material: LiCl powder, brass powder (wt%, Cu:Zn=52:48), LiAlCl₄ (positive electrode lithium ion conducting electrolytic solution, added to the positive electrode chamber through the gas-guide metal tube until the liquid level height of the positive electrode lithium ion conducting electrolytic solution is higher than the bottom surface of the ceramic electrolyte sheet).
Negative electrode material: LiZn alloy.
Battery reaction: Positive electrode: Zn = Zn²⁺ + 2e
   Negative electrode: 2Li⁺ + 2e = 2Li
Total battery reaction: Zn + 2LiCl = ZnCl₂+2Li

LiCl and brass powder were weighed with masses of 3.95g and 7.26g respectively (corresponding to a theoretical capacity of 2.5Ah of the battery).

The structure of the molten lithium metal battery provided in Example 4 is basically the same as that in Example 1, with the only difference being that the adsorption material was added to the positive electrode chamber in this Example; see FIG. 4 (only part of the adsorption material is drawn in FIG. 4).

Battery assembly process: first, the ceramic electrolyte sheet 10, the lithium recess 6, and the convex casing 1 were hermetically sealed with the insulating sealing material 8. The lithium recess 6 was directly placed on the ceramic electrolyte sheet 10, wherein the diameter D of the ceramic electrolyte sheet 10 is 23 mm, and the diameter X of the lithium recess 6 is 18 mm.

Then, the adsorption material was added to the positive electrode chamber 11, and a uniform powder mixture of lithium chloride LiCl and brass powder into the pores of the adsorption material. The diameter Y of the positive electrode chamber 11 is 38 mm, and the height H is 5 mm. The adsorption material has a multi-layer open-pore structure design, roughly filling with the positive electrode chamber. The diameter of the pores of the open-pore structure is 4.4 mm, and the distance between pores is 0.5 mm.

Furthermore, the bottom cover 12 was placed at the bottom of the convex casing 1 and welded together.

Subsequently, the bromide salt mixture LiBr-KBr-CsBr was placed in the lithium recess 6. This bromide salt mixture can better protect the interface. Its diameter M is 18 mm, and its thickness N is 1 mm. Then the negative electrode material LiZn alloy was placed to form the negative electrode chamber 7, wherein the diameter K of the negative electrode material LiZn alloy is 18 mm, and its thickness L is 1 mm.

Furthermore, the lithium recess cover 5 was provided on the lithium recess 6 to seal the lithium recess 6. The upper cover 4 was provided on the convex casing 1, and they were connected together by welding the convex casing 1 and the upper cover 4. The negative electrode current collector 2 was led out from the lithium recess cover 5 and the upper cover 4. The connection between the negative electrode current collector 2 and the upper cover 4 was hermetically sealed with the insulating sealing material 3.

Finally, LiAlCl₄ (positive electrode lithium ion conducting electrolytic solution) was vacuum-introduced into the positive electrode chamber 11 from the gas-guide metal tube 9 under high temperature conditions, and then weld shut the gas-guide metal tube 9 to complete the battery assembly.

The charge and discharge data obtained from the operation of this device are shown in FIG. 10. The first-cycle capacity utilization rate of the battery is 95.9%, and the coulombic efficiency reaches 99.3%.

### Comparative Example 1

The battery is shown in FIG. 11, where 1 is the current collector mesh, 2 is the ceramic U-shaped tube, 3 is the LiBr-KBr-CsBr salt, and 4 is the terminal.
Positive electrode material: LiCl powder, brass powder (wt%, Cu:Zn=52:48 wt), LiAlCl₄
Battery reaction: Positive electrode: Zn = Zn²⁺ + 2e
   Negative electrode: 2Li⁺ + 2e = 2Li
Total battery reaction: Zn + 2LiCl = ZnCl₂ + 2Li

LiCl and brass powder were weighed with masses of 4.75g and 8.71g respectively (corresponding to a theoretical capacity of 3Ah of the battery).

Under high temperature, the LiBr-KBr-CsBr salt not only avoids direct contact between lithium and the ceramic tube but also functions to conduct lithium ions. First, a thin interfacial protective layer is formed on the inner wall of the ceramic tube using LiBr-KBr-CsBr salt. Then, the stainless steel mesh is in tight contact with the inner wall of the ceramic tube. This design prevents the generated metallic lithium from directly contacting the ceramic U-shaped tube, avoiding corrosion of the ceramic tube caused by contact with metallic lithium. However, the liquid protective layer can be lost and deposited at the bottom of the tube, causing the stainless steel and ceramic tube to lose their lithium ion conducting capability. This portion that loses ion conducting capability will have a dead lithium problem, resulting in lower coulombic efficiency of the battery, as shown in FIG. 12. The first-cycle capacity utilization rate of the battery reaches 82.8% of the theoretical value, but its coulombic efficiency is only 38.5%, meaning a significant amount of lithium could not be discharged. Additionally, under prolonged high-temperature conditions, the supporting effect of the stainless steel mesh weakens or is lost, preventing tight attachment to the U-shaped tube, leading to increased internal resistance or open circuit in the battery, thereby affecting battery performance.

In the present disclosure, designing the negative electrode chamber, the ceramic electrolyte sheet, and the positive electrode chamber in a top-down structure enables uniform contact between the negative electrode liquid protective layer and the electrolyte sheet, avoiding the problem of loss of the liquid protective layer at the negative electrode side in U-shaped tubes. The adopted dual gas-guide metal tubes design can further improve the wettability of the positive electrode material, and this structure can effectively remove gas from the positive electrode chamber, making the positive electrode material combination more tight. Moreover, the design where the orifice of the gas-guide metal tube of the convex casing is higher than the bottom surface of the ceramic electrolyte sheet ensures that the liquid level in the positive electrode chamber is always higher than the bottom of the ceramic electrolyte sheet, ensuring good contact between the positive electrode material and the ceramic electrolyte sheet, providing a good migration path for lithium ions, and effectively reducing lithium ion diffusion resistance. Furthermore, the present disclosure adopts a structure where the current collector is in tight contact with the ceramic electrolyte sheet, further reducing the internal resistance of the battery, improving the rate capability of the battery, and thereby enhancing the overall electrochemical performance of the battery.

Compared with the prior art, the present disclosure at least has the following beneficial effects:
(1) The ceramic electrolyte sheet in the present disclosure is simpler to form and easier to prepare compared to ceramic tubes.
(2) The top-down design of the negative electrode chamber, the ceramic electrolyte sheet, and the positive electrode chamber in the present disclosure enables uniform contact between the negative electrode liquid protective layer in the negative electrode chamber and the ceramic electrolyte sheet, avoiding the problem of loss of the liquid protective layer at the negative electrode side in existing U-shaped tube structures.
(3) The design of the gas-guide metal tube and the method of introducing the lithium-ion conducting electrolytic solution into the positive electrode chamber through it in the present disclosure; using a liquid lithium ion conducting electrolytic solution not only improves the wettability of the positive electrode material and enhances lithium ion conducting capability, but also, the electrolyte filling the gaps of the positive electrode material significantly reduces its occupied space, increasing the capacity of the battery. Additionally, the replenishment of the electrolytic solution is possible when necessary.
(4) The design in the present disclosure where the orifice of the gas-guide-metal tube is higher than the bottom surface of the ceramic electrolyte sheet ensures that the liquid level in the positive electrode chamber is always higher than the bottom of the ceramic electrolyte sheet, ensuring good contact between the positive electrode material and the ceramic electrolyte sheet, providing a relatively good migration path for lithium ions, and effectively reducing lithium ion diffusion resistance.
(5) The structure design of the gas-guide metal tube in the present disclosure can also effectively remove gas from the positive electrode chamber, making the positive electrode material combination more tight.
(6) The structure design in the present disclosure where the current collector is in tight contact with the ceramic electrolyte sheet further reduces the internal resistance of the battery, improves the rate capability of the battery, and thereby enhances the overall electrochemical performance of the battery.
(7) The design in the present disclosure where the positive electrode chamber also contains the adsorption material, whose open-pore structure has its internal pores filled with positive electrode material and its external part adsorbs the lithium ion conducting molten salt to form efficient lithium ion conducting channels and electron conducting capability, thereby significantly enhancing the rate capability of the battery. Furthermore, its three-dimensional structure design further optimizes the lithium ion conducting channels, making it suitable for positive electrode chambers of various sizes.

Unless otherwise defined, technical or scientific terms used in this disclosure shall have the ordinary meanings understood by those of ordinary skill in the art to which this disclosure belongs. The terms "first", "second", and similar words used in this disclosure do not denote any order, quantity, or importance, but are merely used to distinguish different components. Words such as "connected" or "combined" are not limited to physical or mechanical connections, but may include electrical connections, whether direct or indirect. "Upper", "lower", "left", "right", etc., are used only to indicate relative positional relationships, and when the absolute position of the described object changes, the relative positional relationship changes accordingly.

The above are preferred embodiments of the present disclosure. It should be noted that for those of ordinary skill in the art, without departing from the principles described in the present disclosure, several improvements and modifications can be made, which should also be regarded as the protection scope of the present disclosure.

## Claims

1. A ceramic electrolyte sheet based molten lithium metal battery, comprising:
a convex casing and a ceramic electrolyte sheet, wherein the ceramic electrolyte sheet divides the convex casing into an upper part and a lower part, the upper part is a negative electrode chamber, and the lower part is a positive electrode chamber; the positive electrode chamber comprises a positive electrode material, and the negative electrode chamber is provided with a lithium recess; an upper surface of the ceramic electrolyte sheet is in tight contact with the lithium recess;
an gas-guide metal tube, wherein the gas-guide metal tube is connected to the convex casing and penetrates the convex casing, and an orifice of the gas-guide metal tube is higher than a bottom surface of the ceramic electrolyte sheet;
an upper cover and a negative electrode current collector, wherein the upper cover is annular, wherein the negative electrode current collector penetrates the upper cover and is led out from the upper cover, the negative electrode current collector and the upper cover are sealed together by means of an insulating sealing material, and the upper cover is placed on the top of the convex casing and seals the convex casing;
the lithium recess serves as a container for storing molten metal lithium, the lithium recess includes a negative electrode material, and a seal is formed between the lithium recess and the convex casing; and
a bottom cover, wherein the bottom cover is connected to the bottom end of the convex casing.

2. The molten lithium metal battery according to claim 1, wherein the ceramic electrolyte sheet, the lithium recess, and the convex casing are hermetically sealed by the insulating sealing material.

3. The molten lithium metal battery according to claim 1, wherein the lithium recess further comprises an interface protection composition; and
the interface protection composition is a mixture of an alkali metal salt or an alkaline earth metal salt.

4. The molten lithium metal battery according to claim 1, wherein the positive electrode chamber further comprises a positive electrode lithium ion conducting electrolytic solution, the positive electrode lithium ion conducting electrolytic solution is LiAlCl₄; and
a liquid level in the positive electrode chamber is always higher than the bottom surface of the ceramic electrolyte sheet.

5. The molten lithium metal battery according to claim 1, wherein the molten lithium metal battery further comprises:
a lithium recess cover, wherein the lithium recess cover is provided on the lithium recess and is used to seal the opening of the lithium recess; and
one end of the negative electrode current collector is in contact with the ceramic electrolyte sheet, and the other end of the negative electrode current collector is led out sequentially from the lithium recess cover and the upper cover.

6. The molten lithium metal battery according to claim 1, wherein a diameter D of the ceramic electrolyte sheet is 5 to 500 mm, a diameter X of the lithium recess is 4 to 450 mm, and a ratio of the diameter X of the lithium recess to the diameter D of the ceramic electrolyte sheet satisfies: 0.4 ≤ X/D ≤ 1.0.

7. The molten lithium metal battery according to claim 3, wherein a diameter M of the interface protection composition is 3 to 400 mm; and/or
a thickness N of the interface protection composition is 0.2 to 300 mm; and/or a ratio of the thickness N to the diameter M of the interface protection composition satisfies: 0.01 ≤ N/M ≤ 0.5.

8. The molten lithium metal battery according to claim 4, wherein the positive electrode chamber is provided with at least one layer of an adsorption material;
the adsorption material comprises at least one layer of an open-pore structure,
the open-pore structure comprises a plurality of through pores arranged along a vertical direction, an interior of the pores of the open-pore structure is filled with the positive electrode material, and the non-porous parts of the open-pore structure adsorb the positive electrode lithium ion conducting electrolytic solution; and
a diameter of the pores in the open-pore structure is 3 mm ≤ r₁ ≤ 12 mm, and a spacing between the pores is y ≤ 1 mm.

9. The molten lithium metal battery according to claim 8, wherein the adsorption material further comprises at least one layer of a non-porous structure, the non-porous structure is provided at a bottom surface of the open-pore structure and seals the bottom of the open-pore structure; the interior of the pores of the open-pore structure is filled with the positive electrode material, and the non-porous parts of the open-pore structure and the non-porous structure adsorb the positive electrode lithium ion conducting electrolytic solution; and
a diameter of the pores in the open-pore structure is r₂ ≥ 3 mm, and a vertical distance from a center position of the pores in the open-pore structure to an adjacent non-porous structure is h ≤ 6 mm.

10. A method for preparing the molten lithium metal battery according to any one of claims 1 to 9, comprising the following steps:
placing the ceramic electrolyte sheet in the convex casing, dividing the convex casing into an upper negative electrode chamber and a lower positive electrode chamber, and placing the lithium recess on the upper surface of the ceramic electrolyte sheet with the lithium recess located in the negative electrode chamber; hermetically sealing the ceramic electrolyte sheet, the lithium recess, and the convex casing with the insulating sealing material;
filling the positive electrode material and/or the adsorption material into the positive electrode chamber;
connecting the bottom cover to the bottom of the convex casing;
filling the negative electrode material into the lithium recess;
placing the upper cover on the top of the convex casing and sealing the convex casing, the negative electrode current collector is led out from the upper cover, and a connection between the negative electrode current collector and the upper cover is hermetically sealed with the insulating sealing material, and the seal is formed between the lithium recess and the convex casing; and
vacuum-introducing the positive electrode lithium ion conducting electrolytic solution into the positive electrode chamber by the gas-guide metal tube to form the ceramic electrolyte sheet based molten lithium metal battery.
